# EUROPÄISCHE PATENTSCHRIFT

(11) **EP 0 739 681 B1**
(45) Veröffentlichungstag und Bekanntmachung des Hinweises auf die Patenterteilung: **24.06.1998**
(21) Anmeldenummer: 96106107.4
(22) Anmeldetag: 18.04.1996
(51) Int. Cl.: B23Q 7/04, B23Q 3/155

(54) **Einrichtung zum Wechseln von Gegenständen zwischen einer Werkzeugmaschine und einem Magazin**
Device for exchanging objects between a magazine and a machine tool
Dispositif pour l'échange des objets entre un magasin et une machine-outil

(30) Priorität: 24.04.1995 DE 19515041
(43) Veröffentlichungstag der Anmeldung: 30.10.1996
(73) Patentinhaber: Traub Drehmaschinen GmbH, 73262 Reichenbach (DE)
(72) Erfinder: Wiesner, Franz, 73277 Owen (DE); Gutbrod, Wolfgang, 73275 Ohmden (DE); Kläne, Michael, 73207 Plochingen (DE)
(74) Vertreter: Goetz, Rupert, Dipl.-Ing.

(56) Entgegenhaltungen:
- DE-A- 3 409 682
- DE-A- 3 420 531
- US-A- 2 714 324

## Beschreibung

Die Erfindung betrifft eine Einrichtung zum Wechseln von Gegenständen wie Werkstücke oder Werkzeuge zwischen einem Arbeitsraum einer Werkzeugmaschine, insbesondere Drehmaschine, und einem Magazin, nach dem Oberbegriff des Anspruchs 1.

Bei einer bekannten Einrichtung dieser Gattung (DE-AS 10 94 070) erstreckt sich von dem an der Längsführung verfahrbaren Wagen eine starre Führung schräg nach unten. An beiden Längsseiten des Wagens ist je eine solche Führung angeordnet. In jeder von ihnen ist ein Schlitten geführt. Am unteren Ende jedes dieser Schlitten ist mittels eines Schwenklagers ein waagebalkenartiger Träger gelagert, an dem zwei Greiferanordnungen zum Greifen eines langgestreckten, im wesentlichen waagerecht zu transportierenden Werkstücks aufgehängt sind. Am Träger sind Führungsrollen gelagert, die nacheinander mit je einer an der zugehörigen Längsseite des Wagens befestigten, kulissenartigen Führung in Eingriff kommen und bewirken, daß der Träger beim Abwärtsfahren des Schlittens vorübergehend leicht schräggestellt wird, um das Werkstück in den Arbeitsraum einer Drehmaschine einzuführen, wo das Werkstück zwischen einer an einem Spannfutter ausgebildeten Spitze und einer Reitstockspitze eingespannt wird. Der Wagen ist zwischen einem Bereich oberhalb dieses Arbeitsraumes und einem in axialer Verlängerung der Drehmaschine angeordneten Magazin hin- und herfahrbar. Mit dieser Fahrbewegung des Wagens hat die Hubbewegung der Schlitten - und somit der Träger - keinen unmittelbaren Zusammenhang. Der Arbeitsraum ist nicht von einem Gehäuse umschlossen.

Aus der DE 33 29 266 A1 ist eine Werkzeugmaschine mit einem ihren Arbeitsraum abdeckenden Schutzschild bekannt, welches durch eine Tür für einen Arm eines Roboters zugänglich ist.

Der Erfindung liegt die Aufgabe zugrunde, eine Einrichtung der eingangs genannten Gattung derart weiterzubilden, daß der Transport von Gegenständen, insbesondere Werkstücken, auch bei beengten Platzverhältnissen im Arbeitsraum einer Werkzeugmaschine, insbesondere Drehmaschine, mit geringem Zeitaufwand und, durch eine verhältnismäßig kleine Öffnung in einem die Maschine umschließenden Gehäuse hindurch, möglich ist.

Die Aufgabe ist erfindungsgemäß mit den Merkmalen des Anspruchs 1 gelöst. Damit wird erreicht, daß durch simultane Ansteuerung der Antriebe die Greifer in der Maschine nach dem Einfahren in den Arbeitsraum in Längsrichtung z.B. in gerader Linie senkrecht nach unten auf die Spindelmitte bewegt werden können, und bei der Rückwärtsbewegung entsprechend.

Daraus ergeben sich vorallem die folgenden Vorteile:
- Die Programmierung der Wegpositionen für die Greifer ist in rechtwinkligen Koordinaten und somit auf einfache Weise möglich, ohne daß dazu die bei üblichen Portalgeräten notwendige lineare Führung vorhanden ist, die höheren Aufwand verursachen, vor allem nach oben hin wesentlich mehr Freiraum über den gesamten Längsfahrbereich des Wagens benötigen und eine höhere Maschinenverkleidung, eine größere Durchtrittsöffnung und eine in den Arbeitsraum der Maschine hineinragende Längsführung erfordern würde.
- Im Magazin können Werkstücke (oder Werkzeuge) je nach ihrer Form mit waagerechter Achse (wellenartige, lange Teile) oder mit senkrechter Achse (scheibenartige kurze Teile) gespeichert sein. Auch beim Aufnehmen und beim Ablegen der Werkstücke (oder Werkzeuge) im Magazin ist eine geradlinige, senkrechte Bewegung vorteilhaft, um z.B. auf einen Führungsdorn des Magazins mit kleinem Führungsspiel zentrierte Teile ohne Verkanten oder Verklemmen nach oben entnehmen und wieder zurückstecken zu können. Der Greifer muß dazu lediglich vor dem Beginn der Abhol- oder Ablegebewegung mit seiner Achse in die entsprechende Position gestellt werden und er behält diese Lage während dieser Bewegung bei.
- Die rechtwinkligen Bewegungen der Greifer sind im beengten Arbeitsraum einfach überschaubar. Dadurch lassen sich Kollisionen weitgehend vermeiden.
- Die simultane Ansteuerung der Antriebe zum Anfahren der Wegpositionen bzw. (gemäß Anspruch 10) zum Einstellen der Winkellage der Greifer ist durch CNC-Steuerung möglich, ohne daß zusätzlicher Aufwand entsteht. Damit ist auch, neben der vorzugsweise senkrechten Bewegung der Greifer, jede beliebige andere Bahn programmierbar.

Vorteilhafte Weiterbildungen der Erfindung ergeben sich aus den Unteransprüchen.

Ein Ausführungsbeispiel der Erfindung wird im folgenden anhand schematischer Zeichnungen mit weiteren Einzelheiten erläutert. Es zeigen:
- Fig.1: die Vorderseite einer erfindungsgemäßen Einrichtung in einer ersten Stellung,
- Fig.2: die gleiche Vorderansicht in einer zweiten Stellung,

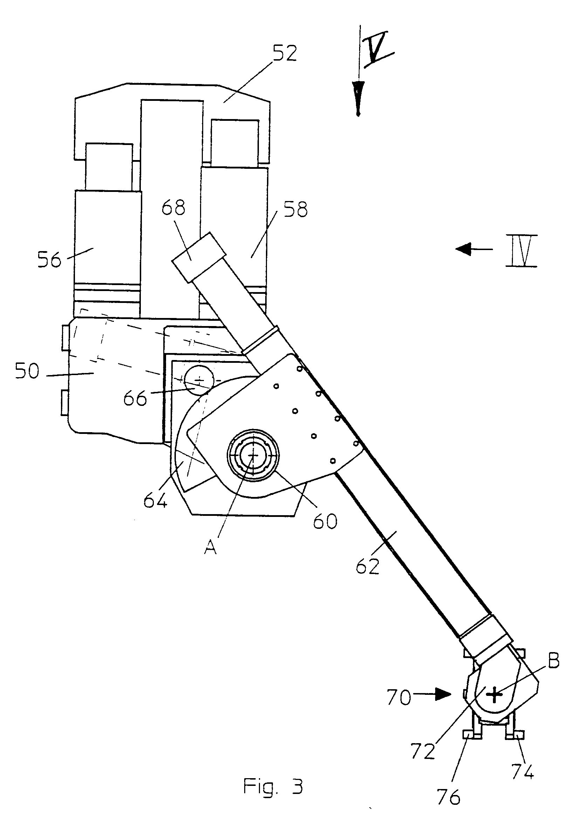

- Fig.3: eine Baugruppe der Einrichtung, dargestellt als vergrößerter Ausschnitt aus Fig.2,

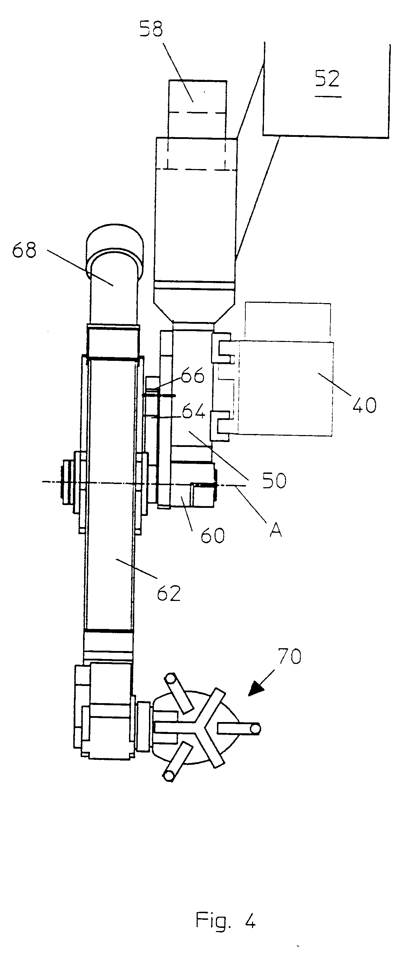

- Fig.4: die Ansicht in Richtung des Pfeils IV in Fig.3,

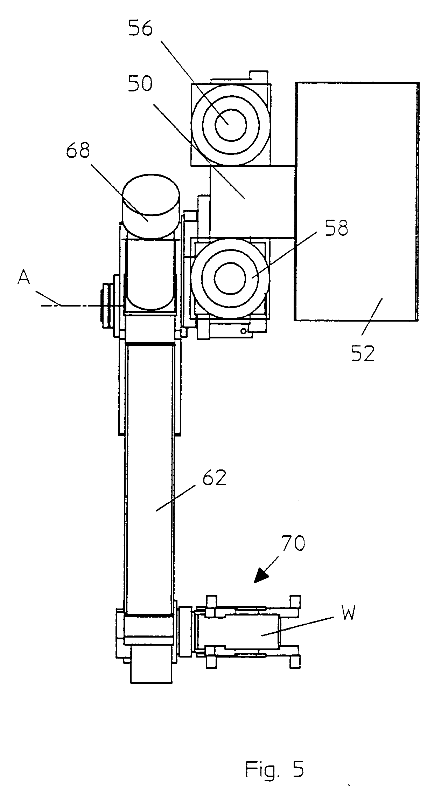

- Fig.5: die Draufsicht in Richtung des Pfeils V in Fig.3 und

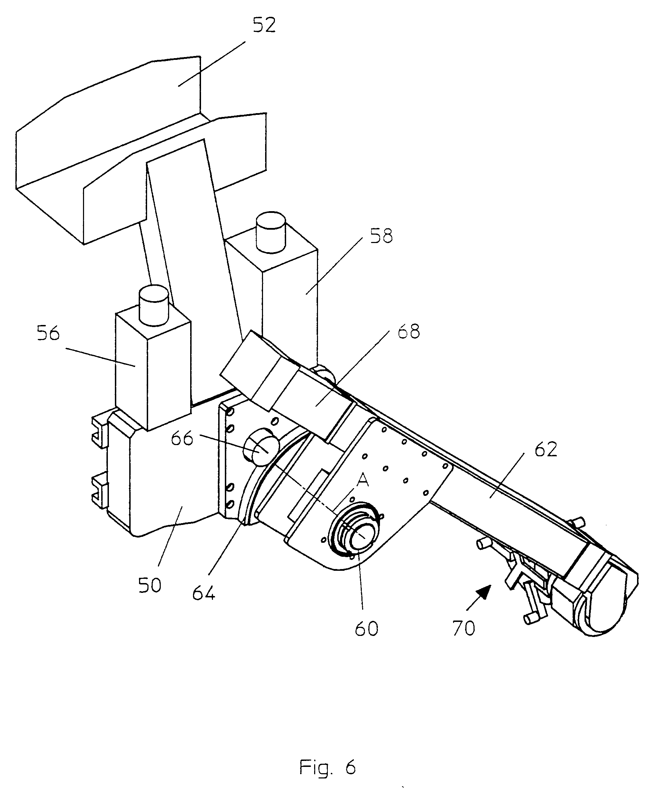

- Fig.6: eine Schrägansicht der genannten Baugruppe.

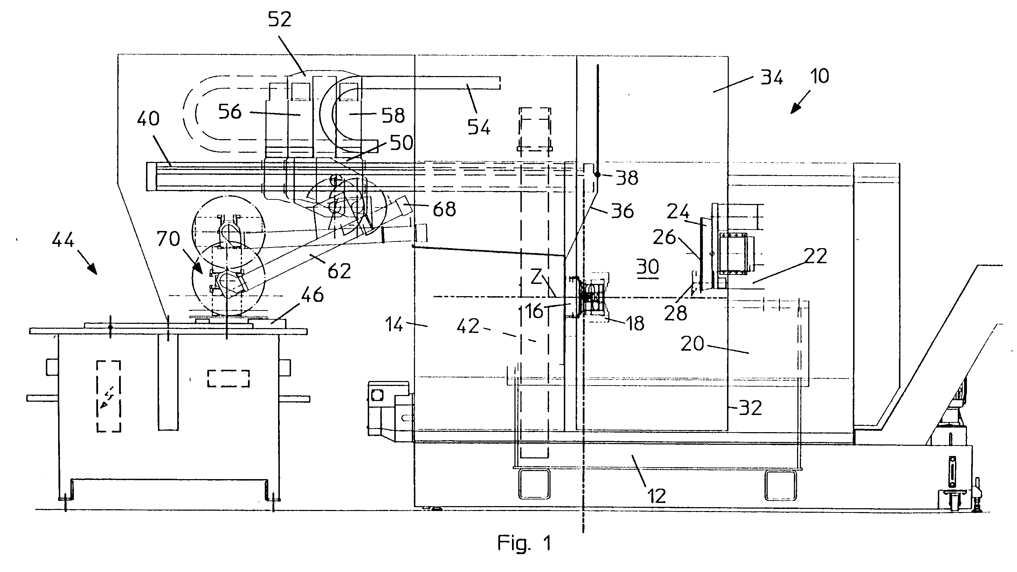

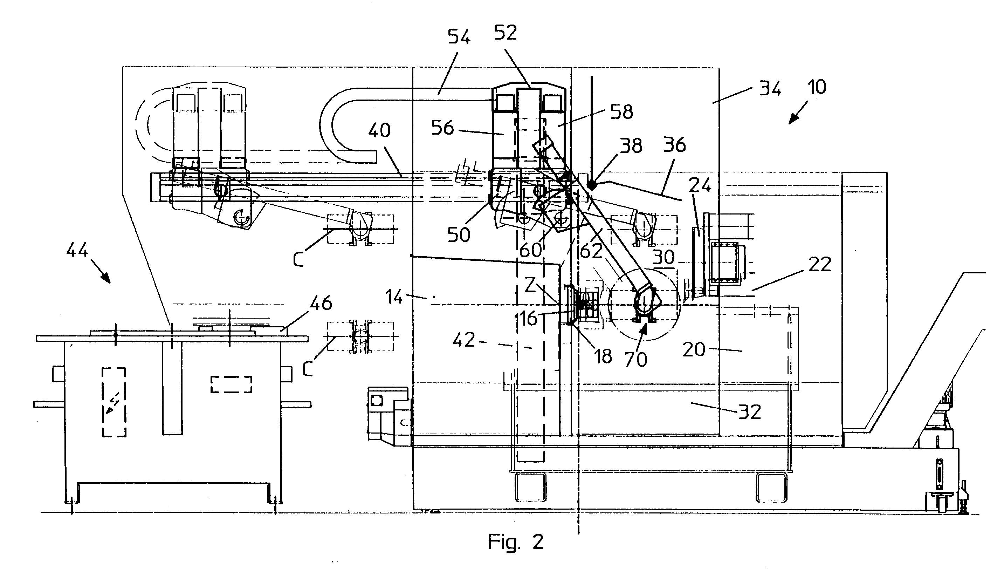

In Fig.1 und 2 ist als Beispiel für eine Werkzeugmaschine 10 ein Drehautomat üblicher Bauart dargestellt, der ein Maschinenbett 12 mit einem darauf befestigten Spindelstock 14 aufweist. Im Spindelstock 14 ist eine Arbeitsspindel 16 um eine im folgenden als Z-Achse bezeichnete waagerechte Längsachse drehantreibbar gelagert. An dem in Fig.1 und 2 rechten Ende der Arbeitsspindel 16 ist ein Spannfutter 18 zum Spannen eines Werkstücks W befestigt. Die Werkzeugmaschine 10 hat ferner einen parallel zur Z-Achse verfahrbaren Längsschlitten 20, der einen im rechten Winkel zur Z-Achse waagerecht verschiebbaren Querschlitten 22 trägt. Am Querschlitten 22 ist ein Werkzeugträger 24 gelagert, der als Trommelrevolver dargestellt und mit über seine Stirnseite 26 hinausragenden Werkzeugen 28 bestückbar ist. Der Raum, in dem die Werkzeuge 28 arbeiten können, wird im folgenden als Arbeitsraum 30 der Werkzeugmaschine 10 bezeichnet.

Zum Schutz der Umgebung gegen herausfliegende Späne und Spritzer von Schneidemulsion ist zumindest der Arbeitsraum 30 der Werkzeugmaschine 10 von einem Gehäuse 32 umschlossen, das sich zum Einrichten der Werkzeugmaschine wie üblich durch Verschieben einer oder mehrerer Schiebetüren öffnen läßt. Im Unterschied zu üblichen Gehäusen dieser Art hat das dargestellte Gehäuse 32 oberhalb des Arbeitsraumes 30 einen turmartigen Gehäuseaufsatz 34, der an seiner in Fig.1 und 2 linken Seite eine Klappe 36 aufweist. Fig.1 zeigt die Klappe 36 in Schließstellung, in der sie sich vom oberen Rand der rechten Stirnfläche des Spindelstocks 14 schräg nach oben erstreckt, wo sie durch ein Scharnier 38 mit waagerechter Schwenkachse mit dem im übrigen starren Gehäuseaufsatz 34 derart gelenkig verbunden ist, daß sie nach innen und oben schwenkbar ist, wie in Fig.2 mit einer vollen Linie dargestellt.

Am Gehäuseaufsatz 34 endet eine waagerechte Längsführung 40, die sich parallel zur Arbeitsspindel 16 über den Spindelstock 14 hinweg in Fig.1 und 2 nach links erstreckt. Die Längsführung 40 ruht, wie in Fig.1 und 2 mit gestrichelten Linien angedeutet, auf portalartigen Stützen 42 und endet oberhalb eines Magazins 44, das als Förderer mit Aufnahmen 46 für je ein Werkstück 48 ausgebildet ist.

Die Längsführung 40 führt einen Wagen 50, der eine Auflage 52 für Energieversorgungs- und Steuerleitungen 54 trägt. An diese sind ein Fahrantrieb 56 und ein Hubantrieb 58 angeschlossen, die im dargestellten Beispiel beide Servomotoren sind. Der Fahrantrieb 56 bewegt den Wagen 50 entlang der Längsführung 40. Unterhalb der Längsführung 40 ist am Wagen 50 ein Schwenklager 60 mit waagerechter, zur Längsführung 40 normaler Schwenkachse A angeordnet, in dem ein Träger 62 in einer senkrechten Ebene pendelnd gelagert ist. Am Träger 62 ist ein Zahnsegment 64 befestigt, in das ein vom Hubantrieb 58 antreibbares Ritzel 66 eingreift. Auf diese Weise ist der Träger 62 in Bezug auf eine Mittellage, in der er vom Schwenklager 60 senkrecht nach unten gerichtet ist, nach vorne und nach hinten um je 70 bis 80° schwenkbar, wie in Fig.1 und 2 jeweils links dargestellt ist. In bestimmten Fällen kann es genügen, wenn der Träger 62, wie in Fig.2 angedeutet, aus einer steil nach unten und vorne weisenden unteren Stellung in eine nur wenig geneigte vordere obere Stellung schwenkbar ist.

Wesentlich ist, daß der Träger 62 über die dem Magazin 44 zugewandte seitliche Begrenzung der Werkzeugmaschine 10, die im dargestellten Beispiel vom Spindelstock 14 gebildet ist, hinwegbewegbar ist, um schräg von oben her und dann allmählich eine steilere Stellung einnehmend, in den Arbeitsraum 30 einzudringen und aus diesem in entsprechender Weise zurückgezogen zu werden. Die Bewegung des Trägers 62 beim Eindringen in den Arbeitsraum 30 ist ungefähr vergleichbar mit der Bewegung eines Stabes beim Stabhochsprung. Sie ermöglicht es dem Träger 62, in dem knappen Arbeitsraum 30 eine Kollision einerseits mit dem Spannfutter 18 und einem darin gespannt gehaltenen Werkstück und andererseits mit dem Revolver oder sonstigem Werkzeugträger 24 und den daran befestigten Werkzeugen 28 zu vermeiden.

Am oberen Ende des Trägers 62 ist ein Antrieb 68 befestigt, der zum Schwenken einer am unteren Ende des Trägers gelagerten Greiferanordnung 70 vorgesehen ist und wiederum von einem Servomotor gebildet sein kann. Die Greiferanordnung 70 ist in einem Lager 72 gelagert, dessen Achse B im dargestellten Beispiel waagerecht und parallel zur Achse A des Schwenklagers 60 angeordnet ist. Zur Greiferanordnung 70 gehören in ansich üblicher Weise zwei Greifer 74 und 76, die einander in Bezug auf die Achse B diametral gegenüber angeordnet sind. Mit einem von ihnen, beispielsweise dem Greifer 74, läßt sich nach jedem Arbeitszyklus der Werkzeugmaschine 10 ein bearbeitetes Werkstück W dem Spannfutter 18 entnehmen, dem der Greifer 76 unmittelbar darauf ein zu bearbeitendes Werkstück zuführt.

Beim Eintauchen des Trägers 62 in den Arbeitsraum 30 werden die Antriebe 56, 58 und 68 von einer NC-Steuerung derart gesteuert, daß der Träger 62 aus seiner in Fig.1 links abgebildeten oberen Stellung allmählich abgesenkt wird, sobald die Greiferanordnung 70 über den Spindelstock 14 hinwegbewegt worden ist, und ehe der Wagen 50 seine Vorwärtsbewegung, in Fig.1 und 2 nach rechts, beendet hat. Der Antrieb 68 ist normalerweise so gesteuert, daß er währenddessen die Greiferanordnung 70 ständig in der abgebildeten Lage hält, in welcher die gemeinsame Achse C der beiden Greifer waagerecht ist, der Greifer 74 also schon seine Lage einnimmt, in der er schließlich ein bearbeitetes Werkstück W dem Spannfutter 18 entnimmt.

Die Klappe 36 ist während jedes Arbeitszyklus der Werkzeugmaschine 10 geschlossen, solange Zerspanungsarbeit geleistet wird und Schneidemulsion fließt. Währenddessen ist der Träger 62 über dem Magazin 44 in eine Stellung abgesenkt worden, die entweder der in Fig.1 oder der in Fig.2 linken unteren Stellung entsprechen kann, und in der ein rohes Werkstück vom Greifer 76 erfaßt wird. Anschließend wird der Träger 62 wieder nach vorne oben geschwenkt und steht nun zum Eindringen in den Arbeitsraum 30 bereit. Gegen Ende des letzten von der Werkzeugmaschine 10 auszuführenden Arbeitsganges wird der Fahrantrieb 56 in Betrieb gesetzt, so daß der Wagen 50 sich nach rechts bewegt. Dadurch wird eine Steuerung betätigt, welche die Klappe 36 öffnet.

Diese Steuerung kann beispielsweise eine mechanische Kurvensteuerung sein, die eine am Wagen 50 befestigte Steuerkurve und ein im Bereich der Längsführung 40 um eine ortsfeste Achse schwenkbares Kurvenfolgeglied aufweisen kann oder umgekehrt ein am Wagen 50 gelagertes Kurvenfolgeglied und eine ortsfeste Kurve. In jedem Fall wird bei der Vorwärtsbewegung des Wagens 50 eine Steuerbewegung ausgelöst, die durch ein Gestänge, einen Kettentrieb oder dgl. auf die Klappe 36 übertragen wird und diese öffnet und geöffnet hält, bis der Wagen 50 nach dem Werkstückwechsel sich wieder soweit von der Werkzeugmaschine 10 entfernt hat, daß die Greiferanordnung 70 den Raum innerhalb des Gehäuseaufsatzes 34 verlassen hat. Anstelle einer mechanischen Steuerung kann der Wagen 50 auch eine elektrische Steuerung betätigen, über die ein die Schwenkung der Klappe 36 bewirkender Elektromotor angetrieben wird.

Wesentlich ist, daß die Klappe 36 rechtzeitig geöffnet wird, um eine Kollision mit der Greiferanordnung 70 oder dem Träger 62 zu vermeiden, und nach dem Rückzug des Trägers 62 und der Greiferanordnung 70 sofort geschlossen wird, damit die Bearbeitung des in das Spannfutter 18 eingesetzten rohen Werkstücks W ohne Verzögerung und ohne Gefahr, daß die Umgebung verschmutzt wird, beginnen kann.

## Patentansprüche

1. Einrichtung zum Wechseln von Gegenständen wie Werkstücke (W) oder Werkzeuge zwischen einem Arbeitsraum (30) einer Werkzeugmaschine (10), insbesondere Drehmaschine, und einem Magazin (44), mit >
- einer Längsführung (40), die über der Werkzeugmaschine (10), insbesondere parallel zu einer zu bedienenden Arbeitsspindel (16), angeordnet ist,
- einem Wagen (50), der mit einem Fahrantrieb (56) entlang der Längsführung (40) zwischen dem Magazin (44) und der Werkzeugmaschine (10) verfahrbar ist,
- einem Träger (62), der in bezug auf den Wagen (50) um eine zur Längsführung (40) normale waagerechte Schwenkachse (A) schwenkbar ist und eine Greiferanordnung (70) trägt,
- einem Hubantrieb (58) zum Absenken und Anheben des Trägers (62) zwischen einer oberen Stellung, in welcher der Wagen (50) mit der Greiferanordnung (70) über die Werkzeugmaschine (10) hinwegbewegbar ist, und einer unteren Stellung, in welcher der Träger (62) mit der Greiferanordnung (70) in den Arbeitsraum (30) eintaucht, und
- einer die Antriebe (56, 58) koordinierenden Steuereinrichtung, dadurch gekennzeichnet, daß
- die Greiferanordnung (70) an einem Ende des Trägers (62) gelagert ist,
- der Träger (62) am Wagen (50) derart pendelnd gelagert ist, daß sein Schwenkbereich sich erstreckt mindestens zwischen einer nur wenig geneigten Stellung, in der das genannte Ende vorne und oben ist, und einer steil nach unten weisenden Stellung, in der das genannte Ende unten ist,
- die Werkzeugmaschine (10) oberhalb des Arbeitsraumes (30) einen turmartigen Gehäuseaufsatz (34) aufweist, der an seiner dem Magazin (44) zugewandten Seite eine Klappe (36) aufweist, und
- der Hubantrieb (58) für eine mit der Bewegung des Wagens (50) entlang der Längsführung (40) koordinierte, mit ihr mindestens teilweise gleichzeitige Schwenkung des Trägers (62) steuerbar ist, so daß
- der Träger (62) bei geöffneter Klappe (36) schräg von oben her und dann allmählich eine steilere Stellung einnehmend in den Arbeitsraum (30) eintaucht.

2. Einrichtung nach Anspruch 1,
dadurch gekennzeichnet, daß der Träger (62) so gesteuert ist, daß er jeweils zu Beginn des Eintauchens in den Arbeitsraum (30) schräg vorwärts und abwärts gerichtet ist.

3. Einrichtung nach Anspruch 2,
dadurch gekennzeichnet, daß der Träger (62) zwischen der Werkzeugmaschine (10) und dem Magazin (44) über eine senkrechte Stellung hinaus in Richtung von der Werkzeugmaschine (10) weg schwenkbar ist.

4. Einrichtung nach Anspruch 3,
dadurch gekennzeichnet, daß der Träger (62) in bezug auf eine Mittellage, in der er senkrecht nach unten gerichtet ist, nach vorne und hinten um je 70° bis 80° schwenkbar ist.

5. Einrichtung nach einem der Ansprüche 1 bis 4,
dadurch gekennzeichnet, daß die Längsführung (40) vor dem Gehäuseaufsatz (34) endet.

6. Einrichtung nach einem der Ansprüche 1 bis 5,
dadurch gekennzeichnet, daß die Klappe (36) in das Innere des Gehäuseaufsatzes (34) hinein zu öffnen ist.

7. Einrichtung nach einem der Ansprüche 1 bis 6,
dadurch gekennzeichnet, daß die Klappe (36) durch die Bewegung des Wagens (50) so gesteuert ist, daß sie sich jeweils unmittelbar vor der Ankunft des Trägers (62) am Gehäuseaufsatz (34) öffnet und nach dem Rückzug des Trägers schließt.

8. Einrichtung nach einem der Ansprüche 1 bis 7,
dadurch gekennzeichnet, daß die Klappe (36) in geschlossener Stellung von der Oberseite eines Spindelstocks (14), oberhalb dessen die Längsführung (40) angeordnet ist, und in dem die Arbeitsspindel (16) gelagert ist, schräg in Richtung vom Magazin (44) weg über dem Arbeitsraum (30) ansteigend geneigt ist.

9. Einrichtung nach einem der Ansprüche 1 bis 8,
dadurch gekennzeichnet, daß die Schwenkachse (A) des Trägers (62) von einem unterhalb der Längsführung (40) am Wagen (50) angeordneten Schwenklager (60) gebildet ist.

10. Einrichtung nach einem der Ansprüche 1 bis 9,
dadurch gekennzeichnet. daß die Greiferanordnung (70) zwei Greifer (74, 76) aufweist, die gemeinsam um eine zur Schwenkachse (A) des Trägers (62) parallele Achse (B) schwenkbar sind.

## Claims

1. A means for exchanging objects, such as workpieces (W) or tools between a work space (30) of a machine tool (10), especially a lathe, and a magazine (44), comprising
- a longitudinal guide means (40) arranged above the machine tool (10), especially in parallel with a main spindle (16) to be served,
- a carriage (50) adapted to be moved along the longitudinal guide means (40) between the magazine (44) and the machine tool (10) by a traversing drive means (56),
- a carrier (62) which is pivotable with respect to the carriage (50) about a horizontal pivot axis (A) extending at right angles to the longitudinal guide means (40) and carries a grip assembly (70),
- an elevating drive means (58) for lowering and elevating the carrier (62) between an upper position at which the carriage (50) is movable, with the grip assembly (70), across the machine tool (10), and a lower position at which the carrier (62) together with the grip assembly (70) dips into the work space (30), and
- a control means to coordinate the drive means (56, 58), **characterized** in that
- the grip assembly (70) is supported at one end of the carrier (62),
- the carrier (62) is supported at the carriage (50) for swinging motion such that its swing extends at least between a position which is only slightly inclined and at which the said end is in front and at the top and a position which is directed steeply downwards and at which the said end is at the bottom,
- above the work space (30), the machine tool (10) comprises a turret-like attachment (34) to the casing including a flap (36) at that side which faces the work space (30), and
- the elevating drive means (58) is controllable for pivoting the carrier (62) in coordination with the movement of the carriage (50) along the longitudinal guide means (40) and at least partly simultaneously with the same so that,
- with the flap (36) in open position, the carrier (62) will dip into the work space (30) obliquely from above, while gradually assuming a steeper position.

2. The means as claimed in claim 1, characterized in that the carrier (62) is controlled such that it is directed obliquely forwardly and downwardly at the beginning of each dip into the work space (30).

3. The means as claimed in claim 2, characterized in that between the machine tool (10) and the magazine (44), the carrier (62) is pivotable beyond a vertical position in a direction away from the machine tool (10).

4. The means as claimed in claim 3, characterized in that the carrier (62) is pivotable to the front and rear by 70 ° to 80 ° each with respect to a central position at which it is directed vertically downwards.

5. The means as claimed in any one of claims 1 to 4, characterized in that the longitudinal guide means (40) ends in front of the attachment (34).

6. The means as claimed in any one of claims 1 to 5, characterized in that the flap (36) is adapted to be opened into the interior of the attachment (34).

7. The means as claimed in any one of claims 1 to 6, characterized in that the flap (36) is controlled in such manner by movement of the carriage (50) that it always opens just before arrival of the carrier (62) at the attachment (34) and closes upon withdrawal of the carrier.

8. The means as claimed in any one of claims 1 to 7, characterized in that the flap (36), in its closed position, is inclined in a direction obliquely away from the magazine (44) and upwards above the work space (30), starting from the top of the headstock (14) above which the longitudinal guide means (40) is disposed and in which the main spindle (16) is supported.

9. The means as claimed in any one of claims 1 to 8, characterized in that the pivot axis (A) of the carrier (62) is formed by a pivot bearing (60) arranged at the carriage (50) below the longitudinal guide means (40).

10. The means as claimed in any one of claims 1 to 9, characterized in that the grip assembly (70) comprises two grip members (74, 76) which are pivotable in common about an axis (B) extending parallel to the pivot axis (A) of the carrier (62).

## Revendications

1. Dispositif pour l'échange d'objets tels que des pièces à usiner (W) entre l'espace de travail d'une machine outil (10), en particulier un tour, et un magasin (44), comprenant
- un guide longitudinal (40) qui est disposé au dessus de la machine outil (10), en particulier parallèlement à une broche (16) à servir,
- un chariot (50) qui est pourvu d'un mécanisme de déplacement (56) et peut circuler le long du guide longitudinal (40) entre le magasin (44) et la machine outil (10),
- un support (62) qui peut pivoter par rapport au chariot (50) autour d'un axe de pivotement horizontal (A) perpendiculaire au guide longitudinal (40) et supporte un dispositif de saisie (70),
- un mécanisme de levage (58) pour monter et baisser le support (62) entre une position supérieure dans laquelle le chariot (50) peut être déplacé par dessus la machine outil (10) avec le dispositif de saisie (70) et une position inférieure dans laquelle le support (62) plonge avec le dispositif de saisie (70) dans l'espace de travail (30), et
- un système de commande coordonnant les mécanismes (56, 58), caractérisé en ce que
- le dispositif de saisie (70) est monté sur palier à une extrémité du support (62),
- le support (62) est monté sur palier pendulaire sur le chariot (50) de telle façon que sa zone de pivotement s'étende au moins entre une position seulement peu inclinée dans laquelle ladite extrémité est située en avant et en haut et une position dirigée très inclinée vers le bas dans laquelle ladite extrémité est en bas,
- la machine outil (10) présente au dessus de l'espace de travail (30) un carter rapporté en forme de tour (34) qui présente sur son côté tourné vers le magasin (44) un volet (36), et
- le mécanisme de levage (58) peut être commandé dans le but d'un pivotement du support (62) coordonné, au moins partiellement simultané avec le déplacement du chariot (50) le long du guide longitudinal (40), de telle façon que
- le support (62) pénètre, lorsque le volet (36) est ouvert, obliquement d'en haut puis en prenant une position généralement plus verticale dans l'espace de travail (30).

2. Dispositif selon la revendication 1,
caractérisé en ce que le support (62) est commandé de telle façon qu'il soit toujours dirigé, au début de la pénétration dans l'espace de travail (30), obliquement vers l'avant et vers le bas.

3. Dispositif selon la revendication 2,
caractérisé en ce que le support (62) peut pivoter entre la machine outil (10) et le magasin (44) en passant par une position verticale dans la direction de l'éloignement de la machine outil (10).

4. Dispositif selon la revendication 3,
caractérisé en ce que le support (62) peut pivoter vers l'avant et vers l'arrière chaque fois de 70° à 80° par rapport à une position médiane dans laquelle il est dirigé verticalement vers le bas.

5. Dispositif selon l'une quelconque des revendications 1 à 4,
caractérisé en ce que le guide longitudinal (40) se termine devant le carter rapporté (34).

6. Dispositif selon l'une quelconque des revendications 1 à 5,
caractérisé en ce que le volet (36) s'ouvre vers l'intérieur du carter rapporté (34).

7. Dispositif selon l'une quelconque des revendications 1 à 6,
caractérisé en ce que le volet (36) est commandé par le déplacement du chariot (50) de façon qu'il s'ouvre chaque fois immédiatement avant l'arrivée du support (62) au carter rapporté (34) et se referme après le retrait du support.

8. Dispositif selon l'une quelconque des revendications 1 à 7,
caractérisé en ce que le volet (36) est incliné montant obliquement en s'éloignant du magasin (44) au dessus de l'espace de travail (30), dans sa position fermée, du côté supérieur d'une poupée fixe (14) au dessus de laquelle est disposé le guide longitudinal (40) et dans laquelle est monté la broche (16).

9. Dispositif selon l'une quelconque des revendications 1 à 8,
caractérisé en ce que l'axe de pivotement (A) du support (62) est formé par un palier de pivotement (60) disposé sur le chariot (50) sous le guide longitudinal (40).

10. Dispositif selon l'une quelconque des revendications 1 à 9,
caractérisé en ce que le dispositif de saisie (70) présente deux organes de saisie (74, 76) qui peuvent pivoter conjointement autour d'un axe (B) parallèle à l'axe de pivotement (A) du support (62).
